# EUROPEAN PATENT APPLICATION

(11) **EP 4 397 875 A1**
(43) Date of publication of application: **10.07.2024**
(21) Application number: 22864351.6
(22) Date of filing: 23.08.2022
(51) Int. Cl.: F16C 32/04, F04D 19/04

(54) **MAGNETIC BEARING DEVICE AND VACUUM PUMP**

(30) Priority: 30.08.2021 JP 2021140302; 05.08.2022 JP 2022125790
(71) Applicant: Edwards Japan Limited, Yachiyo-shi, Chiba 276-8523 (JP)
(72) Inventor: ONO Takaaki, Yachiyo-shi Chiba 276-8523 (JP)
(74) Representative: Openshaw & Co.
(86) International application number: PCT/JP2022/031777
(87) International publication number: WO 2023/032767

(57) **Abstract**

Provided are a magnetic bearing device and a vacuum pump that are capable of recovering from an abnormal state such as oscillation safely, with high operating efficiency, in a levitation system using a magnetic bearing and that have high reliability with low false detection of abnormalities.

The magnetic bearing device includes a magnetic bearing that magnetically supports the rotating body in a floating manner in air, and a magnetic bearing controller that controls the magnetic bearing, the magnetic bearing device further including: a first abnormality detection means for detecting an abnormality of control by the magnetic bearing controller on a basis of a predetermined first abnormality condition, a control parameter correction means for correcting a control parameter of the magnetic bearing controller while continuing an operation of the magnetic bearing device when the first abnormality detection means detects the abnormality of the control, a second abnormality detection means for detecting the abnormality of the control by the magnetic bearing controller on a basis of a predetermined second abnormality condition having a larger degree of abnormality than the first abnormality condition, and a stopping means for stopping the operation of the magnetic bearing device when the second abnormality detection means detects the abnormality of the control.

## Description

### TECHNICAL FIELD

The present invention relates to a magnetic bearing device and a vacuum pump, and particularly relates to a magnetic bearing device and a vacuum pump that are capable of recovering from an abnormal state such as oscillation safely, with high operating efficiency, in a levitation system using a magnetic bearing and that have high reliability with low false detection of abnormalities.

### BACKGROUND ART

With the recent further development of electronics, the demand for semiconductors such as memories and integrated circuits has been increasing rapidly.

These semiconductors are manufactured by doping an extremely pure semiconductor substrate with impurities to give electrical properties to the semiconductor substrate or by etching a fine circuit onto the semiconductor substrate to form a fine circuit.

These operations need to be performed in a high vacuum chamber in order to avoid the impact of dust and the like in the air. Typically, a vacuum pump is used for implementing exhaustion for such a chamber, and particularly a turbomolecular pump, i.e., a type of vacuum pump, is frequently used from the perspective of low residual gas, easy maintenance, and the like.

A semiconductor manufacturing process includes a large of number of processes in which various process gases are caused to act on the semiconductor substrate, and the turbomolecular pump is used not only to evacuate the chamber but also to exhaust these process gases from the chamber.

Furthermore, turbomolecular pumps are also used in equipment such as electron microscopes to create a high degree of vacuum in the environment inside the chamber of an electron microscope and the like in order to prevent refraction of the electron beam caused by the presence of dust and the like.

The turbomolecular pump is equipped with a magnetic bearing device to control the magnetic levitation of the rotating body. In the magnetic bearing device, the position of the rotating body needs to be controlled at high speed and with a strong force when the rotating body passes through a resonance point during accelerated operation or when a noise occurs during constant speed operation.

The position control of the rotating body is performed by feedback control. In the feedback control, when vibration occurs in the rotating body, the vibration is suppressed by the magnetic force synchronized with the vibration. Consequently, an oscillation phenomenon may occur when the design of the feedback control is inappropriate. In addition to this oscillation phenomenon, various abnormalities such as noise, vibrations, and power failure may occur in the turbomolecular pump depending on the environment.

In response to the occurrence of such abnormality, PTL 1 discloses an example in which, when the automatic reset is enabled, the magnetic bearing device is reset by restarting and the operation is continued to restore the normal state, but when the automatic reset is disabled, the operation of the magnetic bearing device is stopped.

In addition, in a case where the magnetic bearing device is applied to a machine tool that requires tool replacement, the natural frequency of the rotor changes depending on the type of tool and on the presence or absence of the tool. PTL 2 and PTL 3 each disclose a method for setting a filter that can be stably controlled even if such a change occurs.

Further, the bending natural frequency of the rotor changes according to the revolution speed of the rotor. PTL 4 discloses a method for setting a filter that can be stably controlled even if such a change occurs.

However, resetting alone as in PTL 1 may not be able to return to normal when, for example, the state of the system, such as the revolution speed, temperature, and time, changes. In order to recover from abnormalities caused by these, the control parameters need to be readjusted.

Further, in PTL 2 and PTL3, since the change of the natural vibration during the operation of the pump is not taken into account, it is assumed that such adjustment is performed immediately after tool replacement, that is, while the operation of the pump is stopped.

Furthermore, PTL 4 mentions a filter setting method that takes into consideration a change in natural vibration depending on the revolution speed in relation to the natural vibration mode specified in advance.

However, if, during the operation of the pump, an abnormality such as oscillation due to an unexpected natural vibration mode occurs or if the attenuation or line width of the preset notch filter is inappropriate, the prior art may not be able to cope with changes in the natural frequency caused by temperature changes or time-dependent changes.

In addition, momentary noise may occur unexpectedly during a pump operation. In case of such noise, it is not always necessary to trigger an alarm or the like, and there are many cases in which there is no problem in a continuing operation. Therefore, an example is disclosed in which, in order to prevent malfunction even when noise is detected, it is determined whether an abnormal signal continues for approximately two seconds, and an alarm is sounded or displayed if the abnormal signal continues for approximately two seconds (PTL 5).

### CITATION LIST

### PATENT LITERATURE

[PTL 1] Japanese Patent Application Publication No. 2006-145006
[PTL 2] Japanese Patent Application Publication No. 2001-293637
[PTL 3] Japanese Patent Application Publication No. 2002-188630
[PTL 4] Japanese Patent Application Publication No. H09-236122
[PTL 5] Japanese Patent Application Publication No. 2000-110777

### SUMMARY OF INVENTION

### TECHNICAL PROBLEM

Incidentally, the readjustment of the control parameters of the magnetic bearing device is usually performed after the operation of the pump is stopped due to an abnormality detection. Therefore, the readjustment requires time for stopping the operation of the pump and restarting the pump, leading to a deterioration of the operation efficiency.

If the control parameters are readjusted during the operation of the pump, the abnormality may worsen due to erroneous readjustment and touchdown may occur, as well as damage to the equipment. Therefore, the pump becomes unsafe, and repairing it involves time and cost.

Moreover, in a case where the pump is operated in a state near the stability limit due to improper settings of the control parameters of the magnetic bearing device, an abnormality such as oscillation is likely to occur due to a slight environmental change. In such a state, the pump is susceptible to manufacturing variations and the installation environment.

Furthermore, when correcting control parameters of a magnetic bearing device, noise may be generated as a result of the correction. This noise may then be determined as an abnormal state by the magnetic bearing device. However, this is temporary and resolved spontaneously without the need for action. Therefore, it does not have to be determined as abnormal.

While the method described in PTL 5 can reduce the number of false detections of abnormalities due to noise caused by control parameter correction, the method delays the detection of abnormalities except for during the control parameter correction. In particular, unless an abnormality is detected and acted upon immediately when the rotating body oscillates, the rotating body may come into contact with a touchdown bearing, thereby shortening the life of the touchdown bearing.

The present invention has been made in view of such problems of the prior art, and an object of the present invention is to provide a magnetic bearing device and a vacuum pump that are capable of recovering from an abnormal state such as oscillation safely, with high operating efficiency, in a levitation system using a magnetic bearing and that have high reliability with low false detection of abnormalities.

### SOLUTION TO PROBLEM

Therefore, the present invention (claim 1) is a magnetic bearing device including a rotating body, a magnetic bearing that magnetically supports the rotating body in a floating manner in air, and a magnetic bearing controller that controls the magnetic bearing, the magnetic bearing device further including: a first abnormality detection means for detecting an abnormality of control by the magnetic bearing controller on a basis of a predetermined first abnormality condition; a control parameter correction means for correcting a control parameter of the magnetic bearing controller while continuing an operation of the magnetic bearing device when the first abnormality detection means detects the abnormality of the control; a second abnormality detection means for detecting the abnormality of the control by the magnetic bearing controller on a basis of a predetermined second abnormality condition having a larger degree of abnormality than the first abnormality condition; and a stopping means for stopping the operation of the magnetic bearing device when the second abnormality detection means detects the abnormality of the control.

By readjusting the control parameter, it is possible to deal with abnormalities caused by changes in the state of the system. Therefore, the robustness of magnetic bearing control increases, improving the operation efficiency. In addition, the control parameter can be readjusted without stopping the operation. Thus, the operation efficiency is improved by shortening the time until recovery. Furthermore, safety can be ensured by setting a plurality of abnormality criteria and stopping the operation when necessary.

Also, the present invention (claim 2) is the invention of the magnetic bearing device, wherein the control parameter correction means includes a changing step of changing the control parameter from a control parameter obtained one step before, a control step of causing the magnetic bearing controller to control using the control parameter changed in the changing step, and a state improvement determination step of determining whether or not a state of the abnormality of the control has improved as a result of the control in the control step, as compared to a result of the control performed one step before the control step, keeping a changed value as the control parameter when it is determined that the state of the abnormality of the control has improved, and returning the control parameter to the control parameter obtained one step before when it is determined that the state of the abnormality of the control has not improved.

As a result, when the state is rather deteriorated by the readjustment of the control parameter, the deterioration can be prevented. Since immediate recovery from an erroneous readjustment can be realized, safety can be improved, and operation efficiency is improved by shortening the readjustment time.

The present invention (claim 3) is the invention of the magnetic bearing device, wherein the control parameter correction means further includes, after the state improvement determination step determines that the state of the abnormality of the control has improved, a first abnormality resolution determination step of determining whether the state of the abnormality of the control has been resolved based on the first abnormality condition, returning to the changing step when it is determined that the state of the abnormality of the control determined based on the first abnormality condition has not been resolved, and keeping the control parameter obtained when it is determined that the state of the abnormality of the control determined based on the first abnormality condition has been resolved.

As a result, the time it takes until the first abnormality is resolved by readjusting the control parameter is shortened, improving the operation efficiency.

The present invention (claim 4) is the invention of the magnetic bearing device, wherein the control parameter correction means further includes, after the first abnormality resolution determination step determines that the state of the abnormality of the control determined based on the first abnormality condition has been resolved, a stability evaluation step of evaluating whether or not the operation of the magnetic bearing device that employs the control parameter saved in the first abnormality resolution determination step has a predetermined stability where the abnormality of the control by the magnetic bearing controller does not occur, and wherein the control parameter of the magnetic bearing controller is further corrected when the stability evaluation step evaluates that the stability is not sufficient.

This enables readjustment taking stability into consideration. The first abnormality is resolved, and the occurrence of a further abnormality can be prevented. Therefore, the operation efficiency improves and the safety improves.

Further, the present invention (claim 5) is the invention of the magnetic bearing device, wherein the stability evaluation step performs the evaluation using at least one of application of a vibration signal, an increase in a control gain of the magnetic bearing controller, and a decrease in the control gain of the magnetic bearing controller.

Accordingly, the stability evaluation step can easily be implemented.

The present invention (claim 6) is the invention of the magnetic bearing device, wherein, when the abnormality of the control determined based on the second abnormality condition is detected in the process of correcting the control parameter by the control parameter correction means, the control parameter correction means applies the control parameter set in the past to stop the operation of the magnetic bearing device.

As a result, the magnetic bearing device can shift to the state where the operation is stopped, with the best control parameter obtained at that time. In the process of correcting the control parameter, even if the condition worsens due to readjustment and the operation needs to be stopped immediately, the operation can be stopped in a relatively safe state.

The present invention (claim 7) is the invention of the magnetic bearing device, wherein when the first abnormality detection means detects the abnormality of the control, the control parameter correction means corrects the control parameter of the magnetic bearing controller while decelerating the rotating body.

Since the control parameter of the magnetic bearing controller is readjusted during deceleration of the rotating body, a rated revolution speed can be reached faster than when the readjustment is performed after the operation is stopped with the revolution speed set to zero. Consequently, the operation efficiency improves.

Also, since the readjustment is performed during deceleration of the rotating body, the revolution speed at the time of the readjustment is smaller than that obtained upon detection of the abnormality. The lower the revolution speed, the smaller the damage caused at the time of touchdown; the rotation speed equal to or lower than a predetermined revolution speed can be ignored. Therefore, it is possible to reduce the damage that occurs when an abnormality increases during the readjustment and the touchdown occurs. Accordingly, the safety improves.

Further, the present invention (claim 8) is the invention of the magnetic bearing device, wherein when the first abnormality detection means detects the abnormality of the control, the control parameter correction means stops revolution speed control of the rotating body and corrects the control parameter of the magnetic bearing controller in a state in which the rotating body runs freely.

By stopping the revolution speed control and causing the rotating body to run freely, the absolute value of the torque applied to the rotating body becomes small. This reduces the vibration of the rotating body. Consequently, the S/N ratio of an input signal to the magnetic bearing controller improves, and the readjustment accuracy improves. Therefore, the readjustment can be performed at high speed.

In addition, since the rated revolution speed can be reached faster than when the readjustment is performed after the rotating body is decelerated or the operation thereof is stopped, the operation efficiency improves.

The present invention (claim 9) is the invention of the magnetic bearing device, wherein when the first abnormality detection means detects the abnormality of the control, the control parameter correction means corrects the control parameter of the magnetic bearing controller while controlling the revolution speed of the rotating body at a constant speed using the revolution speed obtained when the abnormality is detected.

By controlling the rotating body at a constant speed, the state in which an abnormality occurs can be maintained. This makes it possible to efficiently figure out the cause.

Since the rated revolution speed can be reached faster than when the readjustment is performed after the rotating body is decelerated or the operation thereof is stopped, the operation efficiency improves.

Furthermore, the present invention (claim 10) is the invention of the magnetic bearing device, wherein when the first abnormality detection means detects the abnormality of the control, the control parameter correction means corrects the control parameter of the magnetic bearing controller while accelerating the rotating body.

Since the readjustment is performed during acceleration of the rotating body and the acceleration is continued immediately after the first abnormality is resolved, the rated revolution speed can be reached as quick as possible. Consequently, the operation efficiency improves.

The present invention (claim 11) is the invention of the magnetic bearing device, wherein the rotating body is accelerated when the state of the abnormality under the first abnormality condition is resolved after the control parameter of the magnetic bearing controller is corrected.

Since the acceleration is continued immediately after the first abnormality is resolved, the rated revolution speed can be reached quickly. Consequently, the operation efficiency improves.

Further, the present invention (claim 12) is an invention of a vacuum pump including the magnetic bearing device according to any one of claims 1 to 11 mounted therein.

In the vacuum pump, there are many natural vibration modes in which, for example, a rotating body is provided, and oscillation is likely occur due to the natural vibration, abnormalities due to changes in the state of the system can be dealt with by readjusting the control parameters. The operation efficiency of the vacuum pump can be improved by shortening the time it takes until recovery.

Further, the present invention (claim 13) is a magnetic bearing device including a rotating body, a magnetic bearing that magnetically supports the rotating body in a floating manner in air, and a magnetic bearing controller that controls the magnetic bearing, the magnetic bearing device being configured to further include an abnormality detection means for detecting an abnormality of control by the magnetic bearing controller based on a predetermined abnormality condition, a control parameter correction means for correcting a control parameter of the magnetic bearing controller, a predetermined range of areas including a point on a time axis, a revolution speed axis, or a frequency axis where the control parameter correction means corrects the control parameter, and a mitigating means for mitigating the predetermined abnormality condition in the predetermined range of areas.

The abnormality of the control by the magnetic bearing controller is detected based on a predetermined abnormality condition. When correcting a control parameter, noise tends to occur in the control system. However, since this noise is not caused by an abnormality, it should not be detected erroneously. For this reason, the predetermined abnormality condition is mitigated in the predetermined range of areas. On the other hand, when control parameter correction is not performed, the abnormality is determined based on an abnormality condition that is not mitigated, enabling prompt detection of abnormality.

Further, the present invention (claim 14) is the invention of the magnetic bearing device, wherein the predetermined abnormality condition consists of a plurality of types, and an abnormality condition to be mitigated by the mitigating means includes an abnormality condition based on a displacement signal.

The types of the abnormal condition include abnormal displacement or current, contact with a touchdown bearing, abnormal passage of time, abnormal change in DC link voltage, and the like. Here, for example, only displacement is set as an abnormal condition to be mitigated during control parameter correction, and other abnormal conditions are not mitigated.

At the time of control parameter correction, large noise tends to occur in a displacement signal, while noises in other signals are small. Therefore, erroneous detection of noise during control parameter correction is inhibited, and an abnormal state such as power failure that happens to occur simultaneously with control parameter correction can be detected at high speed, thus improving reliability.

The present invention (claim 15) is the invention of the magnetic bearing device, wherein the predetermined range of areas consists of a front area in front of the point and a rear area behind the point, the rear area being larger than the front area.

No noise is generated by a correction of a control parameter prior to control parameter correction, while noise may be generated for approximately one to two seconds immediately after the correction. Therefore, the area behind the point on the time axis, the revolution speed axis, or the frequency axis where control parameter correction is performed is set to be larger than the front area in terms of time, revolution speed, or frequency.

The present invention (claim 16) is also the invention of the magnetic bearing device, wherein the predetermined range of areas consists only of the rear area behind the point.

Since noise does not occur prior to the point at which a control parameter is corrected, a configuration without a mitigation area is also possible.

In addition, the present invention (claim 17) is an invention of a vacuum pump, characterized in including the magnetic bearing device according to claim 13 or 14 mounted therein.

### ADVANTAGEOUS EFFECTS OF INVENTION

As described above, according to the present invention, the magnetic bearing device includes the control parameter correction means for correcting a control parameter of the magnetic bearing controller while continuing the operation of the magnetic bearing device when an abnormality of control is detected by the first abnormality detection means, and the stopping means for stopping the operation of the magnetic bearing device when the abnormality of the control is detected by the second abnormality detection means. Therefore, abnormalities due to changes in the state of the system can be dealt with by readjusting the control parameters. Therefore, the robustness of magnetic bearing control increases, improving the operation efficiency. In addition, the control parameters can be readjusted without stopping the operation. Thus, the operation efficiency is improved by shortening the time until recovery. Furthermore, safety can be ensured by setting a plurality of abnormality criteria and stopping the operation when necessary.

### BRIEF DESCRIPTION OF DRAWINGS

FIG. 1 is a configuration diagram of a turbomolecular pump used in an embodiment of the present invention;
FIG. 2 is a conceptual flowchart of a method for readjusting control parameters;
FIG. 3 is a flowchart showing a method for specifically readjusting control parameters;
FIG. 4 is a diagram of an adjustment procedure for each adjustment step based on a virtual case example;
FIG. 5 is a processing method used when a second abnormality is detected;
FIG. 6 is another processing method used when the second abnormality is detected;
FIG. 7 is an explanatory diagram of a readjustment processing method taking stability into consideration;
FIG. 8 is a specific operation example regarding the relationship between readjustment and a pump operation when a first abnormality is detected (1);
FIG. 9 is a specific operation example (2);
FIG. 10 is a specific operation example (3);
FIG. 11 is a specific operation example (4);
FIG. 12 is a specific operation example (5);
FIG. 13 is a specific operation example (6);
FIG. 14 is a specific operation example (7);
FIG. 15 is a specific operation example (8);
FIG. 16 is a specific operation example (9);
FIG. 17 is a specific operation example (10); and
FIG. 18 is a specific operation example (11).
FIG. 19 is a control parameter correction flowchart;
FIG. 20 is a control parameter correction timing chart;
FIG. 21 is an operation example of correcting a control parameter (1);
FIG. 22 is an operation example of correcting a control parameter (2); and
FIG. 23 is an operation example of correcting a control parameter (3).

### DESCRIPTION OF EMBODIMENTS

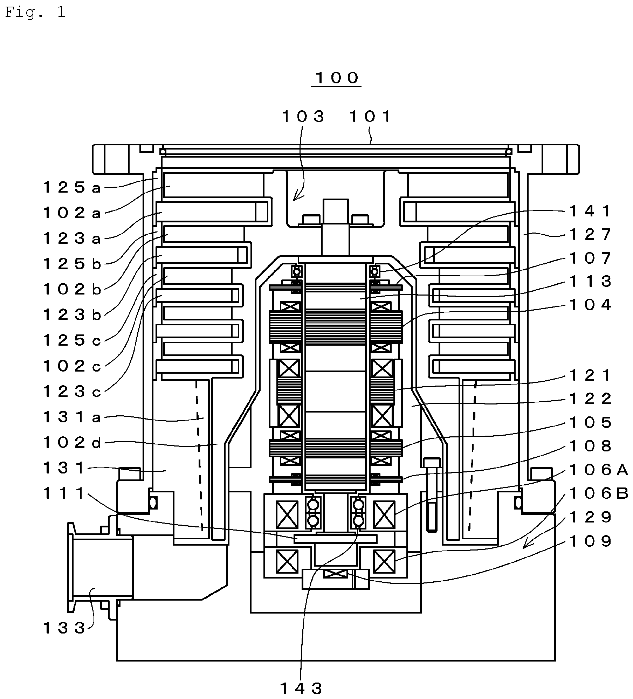

Embodiment of the present invention are now described hereinafter. FIG. 1 shows a configuration diagram of A turbomolecular pump used in the embodiment of the present invention. In FIG. 1, an inlet port 101 is formed at an upper end of a cylindrical outer cylinder 127 of a turbomolecular pump 100. Also, a rotating body 103 in which a plurality of rotor blades 102 (102a, 102b, 102c, etc.) are formed radially in multiple stages on a peripheral portion is provided inside the outer cylinder 127, the rotor blades being configured as turbine blades for sucking and exhausting a gas. A rotor shaft 113 is attached to the center of the rotating body 103. The rotor shaft 113 is supported in a levitated manner in the air and has the position thereof controlled by, for example, a 5-axis control magnetic bearing. The rotating body 103 is generally made of a metal such as aluminum or an aluminum alloy.

An upper radial electromagnet 104 has four electromagnets arranged in pairs along an X-axis and a Y-axis. Four upper radial sensors 107 are provided in the vicinity of the upper radial electromagnets 104 so as to correspond to the respective upper radial electromagnets 104. As the upper radial sensors 107, for example, an inductance sensor having a conduction winding, an eddy current sensor, or the like is used, and the position of the rotor shaft 113 is detected based on a change in the inductance of the conduction winding that changes according to the position of the rotor shaft 113. The upper radial sensors 107 are configured to detect a radial displacement of the rotor shaft 113, that is, the rotating body 103 fixed thereto, and send the radial displacement to a central processing unit (CPU) of a control device, not shown.

The central arithmetic processing device is equipped with the function of a magnetic bearing controller. For example, a compensation circuit having a PID adjustment function generates an excitation control command signal of the upper radial electromagnets 104 based on a position signal detected by the upper radial sensors 107, and a magnetic bearing inverter, not shown, excites and controls the upper radial electromagnets 104 based on this excitation control command signal, thereby adjusting an upper radial position of the rotor shaft 113.

The rotor shaft 113 is made of, for instance, a high magnetic permeability material (such as steel, stainless steel) and configured to be attracted by the magnetic force of the upper radial electromagnets 104. Such adjustment is performed in an X-axis direction and a Y-axis direction independently. A lower radial electromagnet 105 and a lower radial sensor 108 are arranged in the same manner as the upper radial electromagnets 104 and the upper radial sensors 107, and a lower radial position of the rotor shaft 113 is adjusted in the same manner as the upper radial position of the same.

Furthermore, axial electromagnets 106A and 106B are arranged so as to vertically sandwich a discshaped metal disc 111 provided at the lower part of the rotor shaft 113. The metal disc 111 is made of a high magnetic permeability material such as iron. An axial sensor 109 is configured to detect an axial displacement of the rotor shaft 113 and send an axial position signal thereof to the central processing unit (CPU) of the control device, not shown.

In the magnetic bearing controller of the central processing unit, for example, the compensation circuit having the PID adjustment function generates an excitation control command signal of each of the axial electromagnet 106A and the axial electromagnet 106B based on an axial position signal detected by the axial sensor 109, and the magnetic bearing inverter, not shown, excites and controls each of the axial electromagnet 106A and the axial electromagnet 106B based on the excitation control command signals, whereby the axial electromagnet 106A magnetically draws the metal disc 111 upward and the axial electromagnet 106B draws the metal disc 111 downward, adjusting axial position of the rotor shaft 113.

In this manner, the control device is configured to appropriately adjust the magnetic forces of the axial electromagnets 106A and 106B acting on the metal disc 111 to cause the rotor shaft 113 to magnetically float in the axial direction and keep the rotor shaft 113 in the air in a non-contact manner.

On the other hand, a motor 121 has a plurality of magnetic poles arranged circumferentially to surround the rotor shaft 113. Each of the magnetic poles is controlled by the control device to drive the rotor shaft 113 to rotate by means of electromagnetic force acting between each magnetic pole and the rotor shaft 113. Further, the motor 121 incorporates a rotation speed sensor such as a Hall element, a resolver, and an encoder, not shown, and the rotation speed of the rotor shaft 113 is detected by the detection signal of the rotation speed sensor.

Further, for example, a phase sensor, not shown, is attached in the vicinity of the lower radial sensor 108 to detect the phase of rotation of the rotor shaft 113. In the control device, the positions of the magnetic poles are detected by using both of the detection signals of the phase sensor and the rotation speed sensor. A plurality of stator blades 123 (123a, 123b, 123c, etc.) are arranged slightly apart from the rotor blades 102 (102a, 102b, 102c, etc.). The rotor blades 102 (102a, 102b, 102c, etc.) are inclined at a predetermined angle from a plane perpendicular to the axis of the rotor shaft 113, in order to transfer molecules of exhaust gas downward by collision. The stator blade 123 (123a, 123b, 123c, etc.) are made of a metal such as aluminum, iron, stainless steel, or copper, or an alloy containing these metals as components.

Similarly, the stator blades 123 are inclined at a predetermined angle from the plane perpendicular to the axis of the rotor shaft 113, and are arranged alternately with the stages of the rotor blades 102 in such a manner as to face inward of the outer cylinder 127. Outer peripheral ends of the respective stator blades 123 are fitted between and supported by a plurality of stacked stator blade spacers 125 (125a, 125b, 125c, etc.).

The stator blade spacers 125 are each a ring-like member and made of a metal such as aluminum, iron, stainless steel, or copper, or an alloy containing these metals as components. The outer cylinder 127 is fixed to the outer peripheries of the stator blade spacers 125 with a small gap therefrom. A base portion 129 is disposed in the bottom portion of the outer cylinder 127. An outlet port 133 is formed in the base portion 129 and communicated with the outside. The exhaust gas that has entered the inlet port 101 from a chamber (vacuum chamber) side and has been transferred to the base portion 129 is sent to the outlet port 133.

In addition, a threaded spacer 131 is disposed between the bottom of the stator blade spacers 125 and the base portion 129 depending on the use of the turbomolecular pump 100. The threaded spacer 131 is a cylindrical member made of a metal such as aluminum, copper, stainless steel, iron, or an alloy containing these metals as components, and a plurality of thread grooves 131a are engraved in a spiral manner in an inner peripheral surface of the threaded spacer 131. The direction of the spiral of the threaded grooves 131a is a direction in which the molecules of the exhaust gas are transferred toward the outlet port 133 when the molecules of the exhaust gas move in a direction of rotation of the rotating body 103. A cylindrical portion 102d hangs down at the lowermost portion following the rotor blades 102 (102a, 102b, 102c, etc.) of the rotating body 103. An outer peripheral surface of the cylindrical portion 102d is in a cylindrical shape, protrudes toward the inner peripheral surface of the threaded spacer 131, and is positioned in the vicinity of the inner peripheral surface of the threaded spacer 131 with a predetermined gap therebetween. The exhaust gas that has been transferred to the thread grooves 131a by the rotor blades 102 and the stator blades 123 is sent to the base portion 129 while being guided by the thread grooves 131a.

The base portion 129 is a disk-like member constituting a base of the turbomolecular pump 100 and typically made of a metal such as iron, aluminum, or stainless steel. Since the base portion 129 physically holds the turbomolecular pump 100 and functions as a heat conducting path, it is preferred that a metal with rigidity and high thermal conductivity such as iron, aluminum, or copper be used as the base portion 129.

A touchdown bearing 141 is disposed at an upper end of the stator column 122 between the upper radial sensor 107 and the rotating body 103. On the other hand, a touchdown bearing 143 is disposed below the lower radial sensor 108.

Both the touchdown bearing 141 and the touchdown bearing 143 are composed of ball bearings. The touchdown bearing 141 and the touchdown bearing 143 are provided in such a manner that the rotating body 103 can safely shift to the non-levitating state when the rotating body 103 cannot magnetically levitate for some reason, such as when the rotating body 103 rotates abnormally or when a power failure occurs.

According to this configuration, when the rotor blades 102 are driven by the motor 121 to rotate together with the rotor shaft 113, the exhaust gas from the chamber, not shown, is sucked in through the inlet port 101 by the actions of the rotor blades 102 and the stator blades 123. The rotation speed of the rotor blades 102 is usually 20,000 rpm to 90,000 rpm, and the peripheral speed at the tips of the rotor blades 102 reaches 200 m/s to 400 m/s. The exhaust gas sucked in through the inlet port 101 passes between the rotor blades 102 and the stator blades 123 and is transferred to the base portion 129.

Here, if an unexpected abnormality such as oscillation occurs in the rotating body 103, it is desirable to readjust a control parameter in the magnetic bearing controller and continue the operation. A method for readjusting a control parameter will be described below.

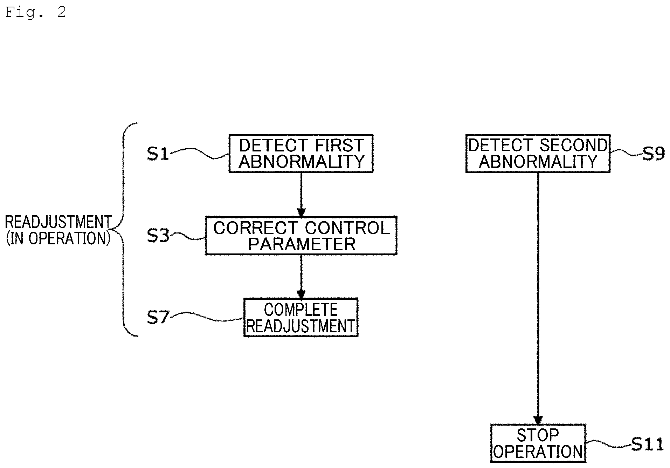

FIG. 2 shows a conceptual flowchart of the method for readjusting a control parameter by means of correction by the control parameter correction means. In step 1 (abbreviated as S1 in the diagram; the same applies hereinafter), the central processing unit (CPU) of the control device detects a first abnormality based on a predetermined determination criterion.

The determination criterion for the first abnormality refers to a situation in which it is desirable to continue the operation of the pump by readjusting a magnetic bearing control parameter even if an abnormality occurs. The predetermined determination criterion for the first abnormality is, for example, a situation in which when oscillation is assumed, the amplitude of the displacement spectrum reaches, for example, 0.5 µm or when the current spectrum amplitude reaches, for example, 0.2 A.

Further, the time when the peak to peak value of the displacement-time waveform reaches, for example, 20 µm may be set as the determination criterion for the first abnormality. Since this value is a time waveform, Fourier transformation is not required, and the amount of calculation by the central processing unit (CPU) can be reduced.

In addition, the time when the peak to peak value of the current-time waveform reaches, for example, 1A may be set as the determination criterion for the first abnormality.

Different values may be set as the determination criterion for the first abnormality, for each frequency component of the spectrum. For example, as to the rotational frequency component of a magnetic bearing and its harmonic component, since the amplitude of the spectrum is large, the criterion is increased.

Further, the determination criterion for the first abnormality may be changed depending on the operating state. For example, when the motor 121 is not energized, a displacement spectrum amplitude of 0.5 µm is used as the determination criterion value as described above, but when the motor 121 is energized, a displacement spectrum amplitude of 1 µm is used as the determination criterion value. This is because the S/N ratio of the displacement signal is better when the motor is not energized.

In step 3, the central processing unit (CPU) corrects the magnetic bearing control parameter. The correction at this time is performed by, for example, setting a new filter such as a notch filter, a phase lead filter, a lowpass filter, or a bandpass filter, or by deleting an existing filter. Also, this correction may be performed by changing parameters such as the center frequency, line width, and size of the existing filter. In addition, in the case of gain scheduling or the like, this correction may be performed by taking the correlations with information such as the revolution speed and temperature of the rotating body 103 and changing the control parameter of the filter accordingly.

Further, this correction may be performed by the central processing unit (CPU) changing the proportional gain, the integral gain, or the differential gain of the control parameter.

The correction during this period may be performed when the rotating body 103 is levitating and rotating, or when the rotating body 103 is levitating and stopped.

In step 9, the central processing unit (CPU) detects a second abnormality based on a predetermined determination criterion. This second abnormality is an abnormality that cannot be dealt with by readjusting the magnetic bearing control parameter, or an abnormality that should stop the operation immediately in some circumstances. That is, the second abnormality refers to a situation where the oscillation has a larger amplitude than the oscillation of the first abnormality, or where the rotating body 103 comes into contact with the touchdown bearing 141 and the touchdown bearing 143, or where the time set in this contact state is up, or where a DC link voltage rises or falls abnormally, or where other abnormalities occur.

Specifically, the predetermined determination criterion for the second abnormality is a value larger than the predetermined determination criterion for the first abnormality. For example, when the condition of the first abnormality is set to a condition where the amplitude of the displacement spectrum reaches 0.5 µm or where the amplitude of the current spectrum reaches 0.2 A, the condition of the second abnormality is changed to a condition where the amplitude of the displacement spectrum reaches 5 µm or where the amplitude of the current spectrum reaches 0.5 A.

Furthermore, for example, when the condition of the first abnormality is set to a condition where the peak to peak value of the displacement-time waveform reaches 20 µm or where the peak to peak value of the current-time waveform reaches 1A, the determination criterion for the second abnormality is set to a condition where the peak to peak value of the displacement-time waveform reaches 50 µm or where the peak to peak value of the current-time waveform reaches 2A. Since this value is a time waveform, Fourier transformation is not required, and the amount of calculation by the central processing unit (CPU) can be reduced.

Different values may be set as the determination criterion for the second abnormality, for each frequency component of the spectrum. For example, as to the rotational frequency component of a magnetic bearing and its harmonic component, since the amplitude of the spectrum is large, the criterion is increased.

Further, the determination criterion for the second abnormality may be changed depending on the operating state. For example, when the motor 121 is not energized, a displacement spectrum amplitude of 5 µm is used as the determination criterion value as described above, but when the motor 121 is energized, a displacement spectrum amplitude of 10 µm is used as the determination criterion value. This is because the S/N ratio of the displacement signal is better when the motor is not energized.

With a predetermined value exceeding the displacement detected by the upper radial sensor 107, the lower radial sensor 108, and the axial sensor 109, the determination criterion for the second abnormality may be set when it is assumed that the rotating body 103 comes into contact with the touchdown bearing 141 and the touchdown bearing 143 or when it is confirmed by a contact detection sensor, not shown, that the rotating body 103 is in contact with the touchdown bearing 141 and the touchdown bearing 143. One contact or a specified number of contacts may be set.

Furthermore, the determination criterion for the second abnormality may be set when the first abnormality has not been resolved even after the control parameter readjustment is performed a predetermined number of times. Alternatively, the determination criterion for the second abnormality may be set when the first abnormality has not been resolved even after a lapse of a predetermined time.

The determination criterion for the second abnormality may also be set when an abnormality that cannot be dealt with by the control parameters such as a power failure, a disconnection, or other failure detection, is detected.

Note that the determination criterion for the second abnormality may be changed depending on the operating state. For example, when the revolution speed of the rotating body 103 is zero, the contact between the rotating body 103 and the touchdown bearing 141 and the touchdown bearing 143 described above is excluded from the determination criterion for the second abnormality, and the operation of the pump is continued. This is because it is safe for the rotating body 103 to come into contact with the touchdown bearing 141 and the touchdown bearing 143 when the revolution speed of the rotating body 103 is zero. On the other hand, when it is determined that the rotating body 103 comes into contact with the touchdown bearing 141 and the touchdown bearing 143 while rotating, the operation of the pump is stopped.

In the case where the central processing unit (CPU) temporarily increases the gain in order to detect the natural frequency, the determination criterion for the second abnormality may be changed. For example, the displacement spectrum amplitude is set to 30 µm as the determination criterion for the second abnormality, and the displacement spectrum amplitude is set to 15 µm in the case of normal operation. This is because the increase in gain is temporary and it is known in advance that the dangerous condition will be removed immediately.

Then, when the central processing unit (CPU) detects the second abnormality in step 9, the central processing unit (CPU) stops the operation of the pump in step 11. The method for stopping the operation here is implemented by setting a revolution speed command value to zero to implement deceleration. Then, at that time, the rotating body 103 is caused to keep floating.

Alternatively, the operation of the pump is stopped by stopping the energization of the magnetic bearings and stopping the rotating body 103 from floating. However, the energization may be stopped by stopping the energization of any of the upper radial electromagnets 104, the lower radial electromagnets 105, and the axial electromagnets 106A and 106B.

To stop the operation during the rotation of the rotating body 103, either a method for setting the revolution speed command value to zero and decelerating, or a method for stopping the energization of the magnetic bearing can be selected. On the other hand, when the rotating body 103 stops floating, only the method for stopping the energization of the magnetic bearings is possible.

The method for readjusting the control parameters shown in FIG. 2 can be implemented by the calculation by the central processing unit (CPU) as described above. However, the method may be implemented by an externally set device.

Note that the readjustment of the control parameters may be set as permitted or prohibited. For example, transitioning to "permitted" is done at the initial setting immediately after shipment, immediately after turning on the power, after a certain period of time, when installing/removing the pump, when replacing a cable, when detecting a state change such as when there is a temperature change, or when specified by the user. On the other hand, transitioning to "prohibited" can be done when the rated revolution speed is reached in the permitted state, when the operation is stopped after the rated revolution speed is reached in the permitted state, or when specified by the user.

The rotational drive device of the rotating body 103 is not limited to the motor 121; a generator, a gas turbine, a steam turbine, an impulse water turbine, a reaction water turbine, and the like are applicable.

As described above, abnormalities caused by changes in the state of the system can be dealt with by readjusting the control parameters. Therefore, the robustness of the magnetic bearing control is increased, and the operating efficiency is improved. In addition, the control parameters can be readjusted without stopping the operation. Thus, the operation efficiency is improved by shortening the time until recovery. Furthermore, safety can be ensured by setting a plurality of abnormality criteria and stopping the operation when necessary.

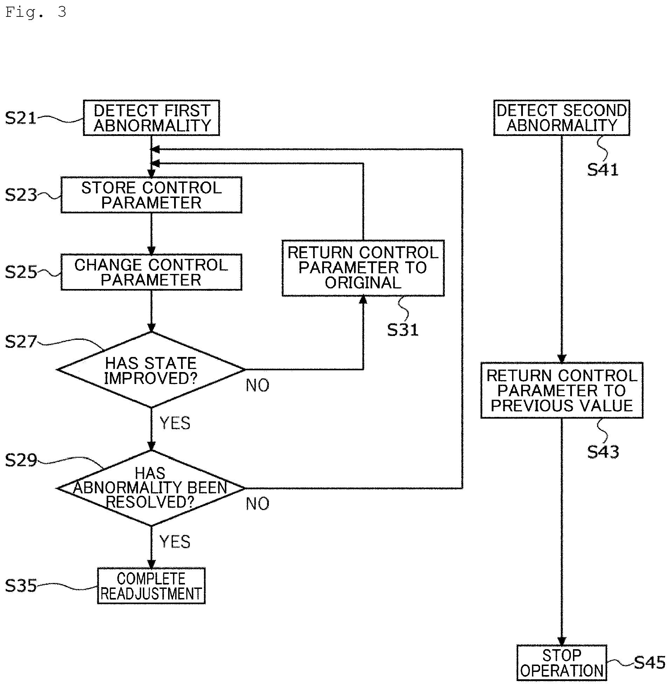

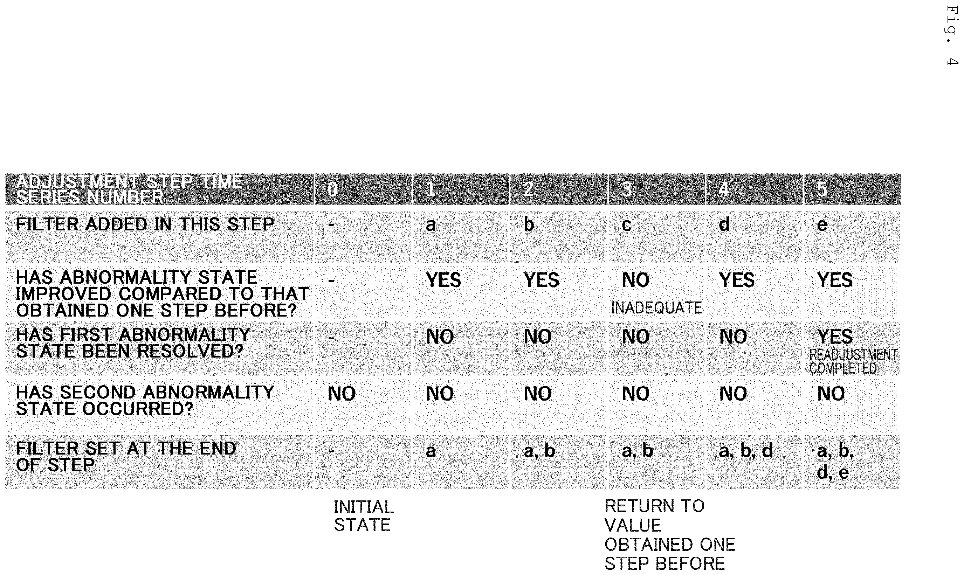

Next, based on FIGS. 3 and 4, the method for readjusting a control parameter by means of correction by the control parameter correction means will be described more specifically. FIG. 4 is a diagram schematically illustrating an adjustment procedure with adjustment steps based on a virtual case example. As shown in FIG. 3, in step 21, the central processing unit (CPU) detects the first abnormality based on the predetermined determination criterion described above. In step 41 in FIG. 3, the central processing unit (CPU) detects the second abnormality based on the predetermined determination criterion described above.

In so doing, the central processing unit (CPU) virtualizes a situation in which the first abnormality is detected and the second abnormality is not detected. A time series number 0 in FIG. 4 represents an initial state, that is, a state immediately before the detection of the first abnormality. A time series number 1 represents an adjustment step immediately after the detection of the first abnormality. Since the first abnormality is detected, the processing proceeds to step 23, and the control parameter corresponding to the time series number 0, which is the initial state, is stored in the central processing unit (CPU). Then, in step 25, the central processing unit (CPU) changes a control parameter (changing step) and executes magnetic bearing control by means of this control parameter (control step). That is, as shown by the time series number 1 in FIG. 4, at this time, the central processing unit (CPU) executes the magnetic bearing control, with a filter an added to the central processing unit (CPU). In the following, for the sake of simplicity, control parameter correction will be described as adding a filter, but other methods may also be used.

As a result of the control, in step 27, the central processing unit (CPU) determines whether or not the state of the first abnormality has improved (state improvement determination step). That is, specifically, in the time series number 1 of FIG. 4, the central processing unit (CPU) determines whether or not the state of the first abnormality has improved as compared with that obtained one step before. The improvement here means the result of the comparison with the state obtained one step before, and does not necessarily mean that the first abnormality has been resolved. If the state of the first abnormality is improved, the control parameter at this point is kept, and the processing proceeds to step 29, to determine whether or not the first abnormality has been resolved (first abnormality resolution determination step). In the time series number 1 of FIG. 4, although the state of the first abnormality has improved, the first abnormality has not been resolved, so the processing returns to step 23. Therefore, the filter that is set at the end of the time series number 1 in FIG. 4 is the filter a.

Since this is the second round of the processing done by returning to step 23, it is shown by a time series number 2 in FIG. 4. First, in step 23, the filter a, which is the control parameter set in the time series number 1, is stored in the central processing unit (CPU). In step 25, the central processing unit (CPU) adds a filter b in addition to the filter a (changing step) and performs magnetic bearing control with this control parameter (control step). Then, in step 27, the central processing unit (CPU) determines whether or not the state of the first abnormality has improved (state improvement determination step). That is, in the time series number 2, it is determined whether or not the state of the first abnormality has improved as compared with that obtained one step before. In the time series number 2 of FIG. 4, since the state of the abnormality has improved, the control parameter at this point is kept, and the processing proceeds to step 29, to determine whether or not the first abnormality has been resolved (first abnormality resolution determination step). Since the first abnormality has not been resolved, the processing returns to step 23. Therefore, the filters that are set at the end of the time series number 2 in FIG. 4 are the filter a and the filter b.

Since this is the third round of the processing done by returning to step 23, it is shown by a time series number 3 in FIG. 4. First, in step 23, the filter a and the filter b, which are the control parameters set in the time series number 2, are stored in the central processing unit (CPU). In step 25, the central processing unit (CPU) adds a filter c in addition to the filter a and the filter b (changing step), and executes the magnetic bearing control with this control parameter.

Then, in step 27, the central processing unit (CPU) determines whether or not the state of the first abnormality has improved (state improvement determination step). That is, in the time series number 3, it is determined whether or not the state of the first abnormality has improved as compared with that obtained one step before. In the time series number 3 of FIG. 4, the central processing unit (CPU) determined that the state of the first abnormality did not improve. At this time, the processing proceeds to step 31, and the central processing unit (CPU) returns the filter settings to the filter a and the filter b, which are the values of the time series number 2 one step before. Subsequently, the processing returns to step 23 again. Therefore, the filters that are set at the end of the time series number 3 in FIG. 4 remain the filter a and the filter b.

Since this is the fourth round of the processing done by returning to step 23, it is shown by a time series number 4 in FIG. 4. First, in step 23, the filter a and the filter b, which are the control parameters set in the time series number 3, are stored in the central processing unit (CPU). In step 25, the central processing unit (CPU) adds a filter d in addition to the filter a and the filter b (changing step), and executes the magnetic bearing control with this control parameter (control step). Then, in step 27, the central processing unit (CPU) determines whether or not the state of the first abnormality has improved (state improvement determination step). That is, in the time series number 4, it is determined whether or not the state of the first abnormality has improved as compared with that obtained one step before. In the time series number 4 of FIG. 4, since the state of the first abnormality has improved, the control parameter at this point is kept, and the processing proceeds to step 29, to determine whether or not the first abnormality has been resolved (first abnormality resolution determination step). Since the first abnormality has not been resolved, the processing returns to step 23. Therefore, the filters that are set at the end of the time series number 4 in FIG. 4 are the filter a, the filter b, and the filter d.

Since this is the fifth round of the processing done by returning to step 23, it is shown by a time series number 5 in FIG. 4. First, in step 23, the filter a, the filter b, and the filter d, which are the control parameters set in the time series number 4, are stored in the central processing unit (CPU). In step 25, the central processing unit (CPU) adds a filter e in addition to the filter a, the filter b, and the filter d (changing step), and executes the magnetic bearing control with this control parameter (control step). Then, in step 27, the central processing unit (CPU) determines whether or not the state of the first abnormality has improved (state improvement determination step). That is, in the time series number 5, it is determined whether or not the state of the first abnormality has improved as compared with that obtained one step before. In the time series number 5 of FIG. 4, since it is determined in step 27 that the state of the first abnormality has improved, the control parameter at this point is kept, and the processing proceeds to step 29, to determine whether or not the first abnormality has been resolved (first abnormality resolution determination step). Since it is determined in step 29 that the first abnormality has been resolved, the control parameter at this point is kept, and the processing proceeds to step 35. In step 35, the filter a, the filter b, the filter d, and the filter e that are set at this time are saved, completing the readjustment. Therefore, the filters that are set at the end of the time series number 5 in FIG. 4 are the filter a, the filter b, the filter d, and the filter e. Subsequent operations are performed according to the control parameters saved in step 35.

Note that, in the time series numbers 0 to 5 of FIG. 4, it is assumed, for the sake of simplicity, that the second abnormality was not detected in step 41.

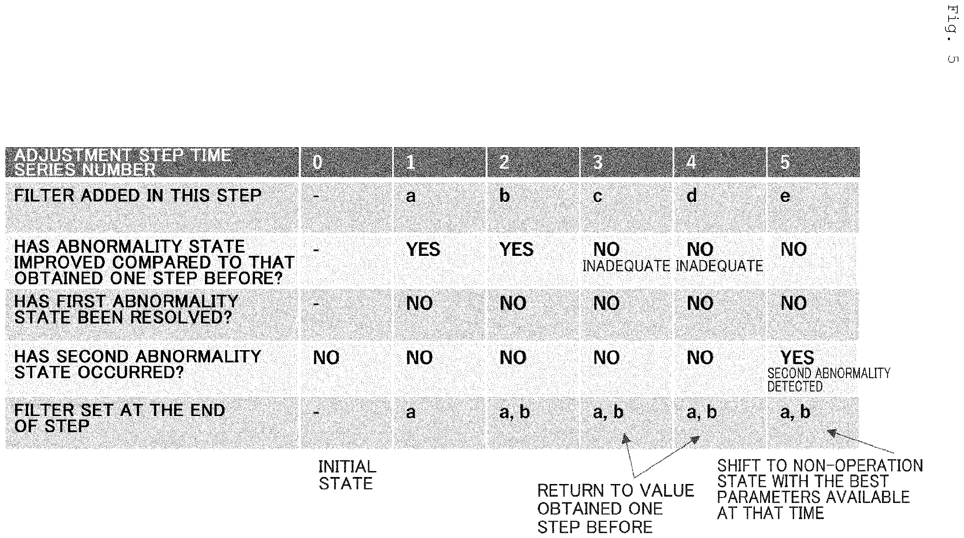

Next, a processing method implemented upon detection of the second abnormality will be described with reference to FIG. 5.
Since the time series numbers 0 to 3 of FIG. 5 are the same as those of FIG. 4, the description thereof will be omitted accordingly. In the time series number 4 of FIG. 5, first, in step 23, the filter a and the filter b, which are the control parameters set in the time series number 3, are stored in the central processing unit (CPU). In step 25, the central processing unit (CPU) adds a filter d in addition to the filter a and the filter b (changing step), and executes the magnetic bearing control with this control parameter (control step).

Then, in step 27, the central processing unit (CPU) determines whether or not the state of the first abnormality has improved (state improvement determination step). That is, in the time series number 4, it is determined whether or not the state of the first abnormality has improved as compared with that obtained one step before. In the time series number 4 of FIG. 5, the central processing unit (CPU) determined that the first abnormality did not improve. At this time, the processing proceeds to step 31, and the central processing unit (CPU) returns the control parameters to the filter a and the filter b, which are the values obtained one step before. Subsequently, the processing returns to step 23 again. Therefore, the filters that are set at the end of the time series number 4 in FIG. 5 remain the filter a and the filter b.

Since this is the fifth round of the processing done by returning to step 23, it is shown by a time series number 5 in FIG. 5. First, in step 23, the filter a and the filter b, which are the control parameters set in the time series number 4, are stored in the central processing unit (CPU). In step 25, the central processing unit (CPU) adds a filter e in addition to the filter a and the filter b (changing step), and executes the magnetic bearing control with this control parameter (control step).

Here, it is assumed that the setting of the filter e is inappropriate, which worsened the abnormality of the magnetic bearing control, and that the second abnormality occurs.

In so doing, in step 41 that was being processed concurrently, the central processing unit (CPU) detects the second abnormality. Therefore, the processing forcibly proceeds to step 43, and the control parameters are returned to the previous values by the central processing unit (CPU). That is, in the case of FIG. 5, the filter a and the filter b are set as the best parameters at the time, the processing proceeds to step 45, and the operation is stopped.

As described above, even if the state worsens due to readjustment and consequently the operation needs to be stopped immediately, the operation can be stopped relatively safely by returning the control parameters to the previous values.

Further, in order to ensure safety, it is important that the second abnormality is detected immediately upon its occurrence and the operation is stopped. Therefore, it is desirable that step 41 be executed as frequently as possible independently of the readjustment step following the detection of the first abnormality.

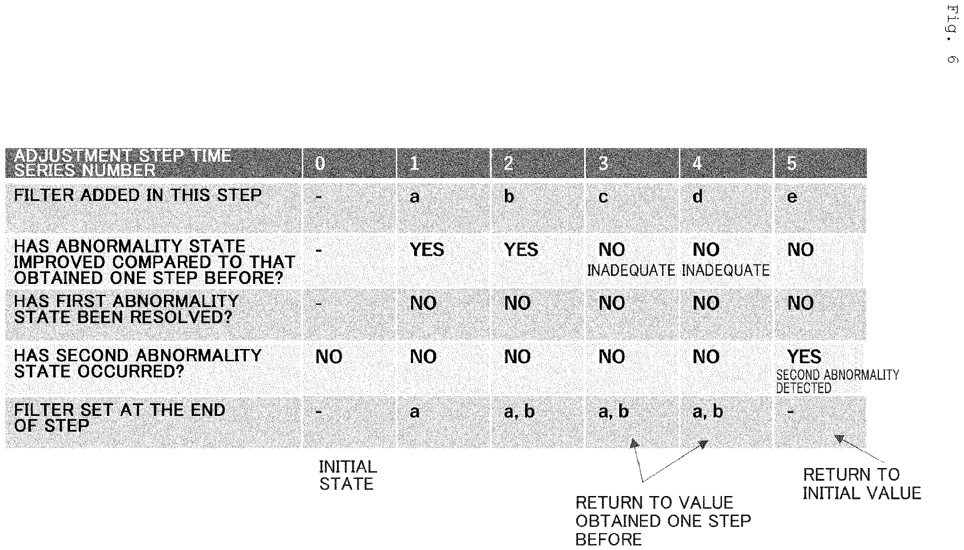

Next, another processing method implemented upon detection of the second abnormality will be described with reference FIG. 6. In FIG. 6, since the time series numbers 0 to 4 of FIG. 6 are the same as those of FIG. 5, the description thereof will be omitted accordingly.

In the time series number 5 of FIG. 6, similarly to FIG. 5, the central processing unit (CPU) detects the second abnormality in step 41. Therefore, the process forcibly proceeds to step 43, and the control parameters are returned to the previous values. That is, in the case of FIG. 6, the control parameters are returned to the initial values by the central processing unit (CPU). Proceeding to step 45, with the filters remaining at the initial values, the operation of the pump is stopped.

A readjustment processing method taking stability into consideration will be described next.

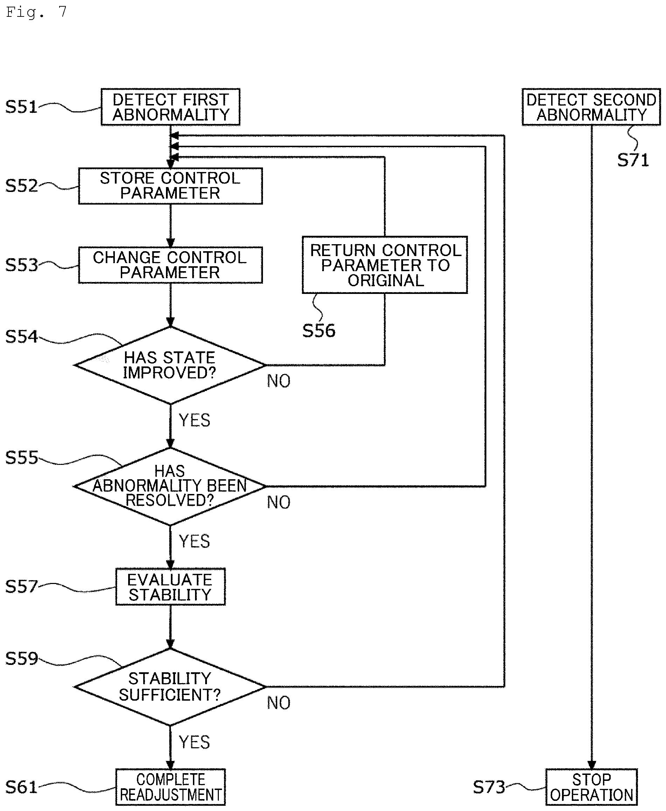

As shown in FIG. 7, in step 51, the central processing unit (CPU) detects the first abnormality based on the predetermined determination criterion described above. In step 71 of FIG. 7, the central processing unit (CPU) detects the second abnormality based on the predetermined determination criterion described above.

If the central processing unit (CPU) detects the first abnormality in step 51 but does not detect the second abnormality in step 71, first, the control parameters are stored in the central processing unit (CPU) in step 52. Thereafter, in step 53, the central processing unit (CPU) changes the control parameters (changing step) and executes the magnetic bearing control with the control parameters (control step)

Then, in step 54, the central processing unit (CPU) determines whether or not the state of the first abnormality has improved (state improvement determination step). If the state of the first abnormality has not improved, the central processing unit (CPU) restores the control parameters in step 56 and then returns to step 52. On the other hand, if the state of the first abnormality has improved, the control parameter at this point is kept, the processing proceeds to step 55, and the central processing unit (CPU) determines whether or not the first abnormality has been resolved (state improvement determination step). If the first abnormality has not been resolved, the processing returns to step 52. On the other hand, if it is determined in step 55 that the first abnormality has been resolved, the processing proceeds to step 57, and the stability evaluation is performed by the central processing unit (CPU (stability evaluation step). This not only confirms that the first abnormality has been resolved, but also determines whether such resolution is stable rather than temporary. This stability evaluation is performed by, for example, the central processing unit (CPU) generating a vibration signal and sending it to the magnetic bearing device, and the central processing unit (CPU) measuring the transfer function thereof. Alternatively, the stability evaluation is performed by the central processing unit (CPU) generating a vibration signal and sending it to the magnetic bearing device, and the central processing unit (CPU) measuring the step response or impulse response.

The vibration signal is, for example, a step signal, an impulse signal, white noise, a single frequency sine wave, a frequency swept sine wave, a swept sign, or the like. Also, the central processing unit (CPU) may increase or decrease the magnetic bearing control gain to determine the stability based on whether or not the first abnormality or the second abnormality occurs. Further, the measurement of the transfer function, the measurement of the step response, and the measurement of the impulse response may be combined with the increase and decrease of the magnetic bearing control gain. The vibration signal may be generated by the central processing unit (CPU) or may be input from an external device.

This enables readjustment in consideration of stability. The first abnormality is resolved, and the occurrence of a further abnormality can be prevented. Therefore, the operation efficiency improves and the safety improves.

In a case where the central processing unit (CPU) detects the second abnormality in step 71, the operation of the pump is stopped in step 73.

Next, the relationship between the above-mentioned readjustment and the operation of the pump when the first abnormality is detected will be described based on a specific operation example.

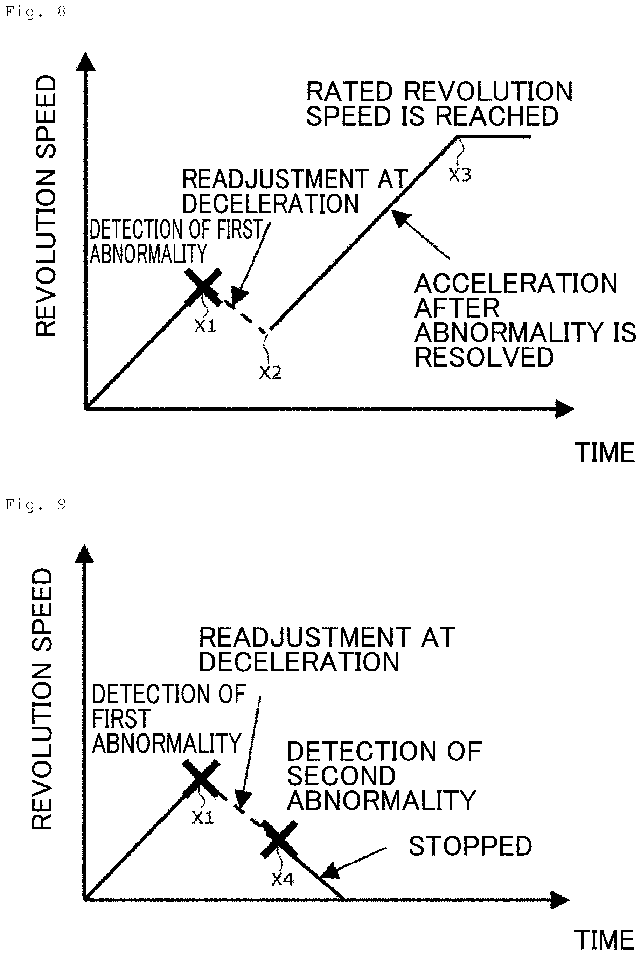

First, in the operation example of FIG. 8, when the central processing unit (CPU) detects the first abnormality at the point indicated by "X1" in the diagram when the pump is started, the central processing unit (CPU) executes readjustment while controlling the deceleration of the rotating body 103. The deceleration control means a control that gives a torque that lowers the revolution speed, such as regenerative operation of the motor, output of the generator, and the like. Then, after the central processing unit (CPU) confirms that the first abnormality has been resolved at the point indicated by "X2", the central processing unit (CPU) accelerates the rotating body 103.

As a result, even if the first abnormality occurs, the time required to reach the rated revolution speed at the point indicated by "X3" can be saved. That is, since the readjustment is performed during the deceleration operation of the rotating body 103, the rated revolution speed can be reached earlier than in the case where readjustment is performed after stopping the operation with the revolution speed set to zero. Therefore, the operation efficiency is improved.

In addition, since the central processing unit (CPU) performs readjustment during the deceleration operation of the rotating body 103, the revolution speed at the time of readjustment is smaller than that at the time of abnormality detection. The lower the revolution speed, the smaller the damage caused at the time of touchdown; the rotation speed equal to or lower than a predetermined revolution speed can be ignored. Therefore, it is possible to reduce the damage that occurs when an abnormality increases during the readjustment and the touchdown occurs. Accordingly, the safety improves.

Next, in the operation example of FIG. 9, when the central processing unit (CPU) detects the first abnormality at the point indicated by "X1" in the diagram when the pump is started, the central processing unit (CPU) executes readjustment while decelerating the rotating body 103 in a similar manner to the operation example of FIG. 8. When the central processing unit (CPU) detects the second abnormality at the point indicated by "X4", the central processing unit (CPU) stops the rotating body 103. As a result, the safety of the pump can be ensured.

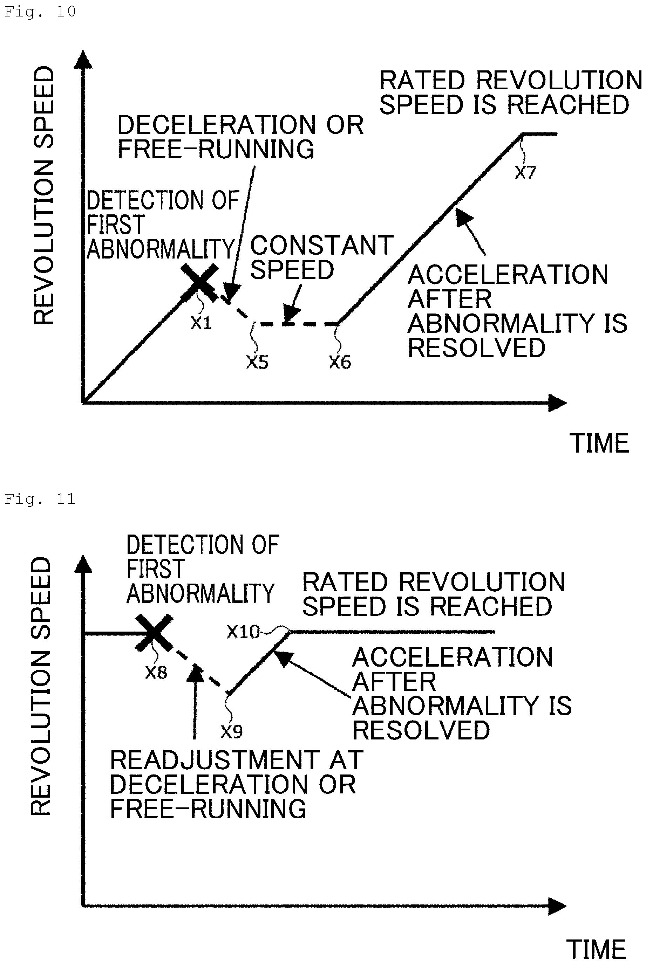

Next, in the operation example of FIG. 10, when the central processing unit (CPU) detects the first abnormality at the point indicated by "X1" in the diagram when the pump is started, the central processing unit (CPU) decelerates the rotating body 103 or causes it to run freely. To cause the rotating body 103 to run freely means to stop the energization in the case of the motor or generator. During the free run, the disturbance force acting on the rotating body and the noise to the sensor signal are reduced by stopping the energization, and the S/N ratio of the rotating body displacement signal and the magnetic bearing current signal, which are the input signals to the magnetic bearing controller, improves.

When the revolution speed drops to the point indicated by "X5" in the diagram, the central processing unit (CPU) performs constant speed control. The point indicated by "X5" is a point where damage at the time of touchdown is assumed to be small. In this case, the readjustment may be started during deceleration by the central processing unit (CPU), or may be performed after a constant speed is obtained.

Then, once the central processing unit (CPU) confirms that the first abnormality has been resolved at the point indicated by "X6", the central processing unit (CPU) accelerates the rotating body 103. As a result, even if the first abnormality occurs, the time required to reach the rated revolution speed at the point indicated by "X7" can be saved. That is, since the readjustment is performed by the central processing unit (CPU) during the deceleration operation or constant speed control on the rotating body 103, the rated revolution speed can be reached earlier than when the readjustment is performed after stopping the operation with the revolution speed set to zero. Consequently, the operation efficiency improves.

Next, in the operation example of FIG. 11, if the central processing unit (CPU) detects the first abnormality at the point indicated by "X8" in the diagram during operation at the rated revolution speed, the central processing unit (CPU) starts readjustment before the revolution speed reaches zero even when decelerating the rotating body or causing the rotating body to run freely. At this moment, when the central processing unit (CPU) confirms that the first abnormality has been resolved at the point indicated by "X9", the central processing unit (CPU) accelerates the rotating body 103. As a result, even if the first abnormality occurs, the time it takes to reach the rated revolution speed at the point indicated by "X10" can be saved, resulting in quick recovery to the rated revolution speed.

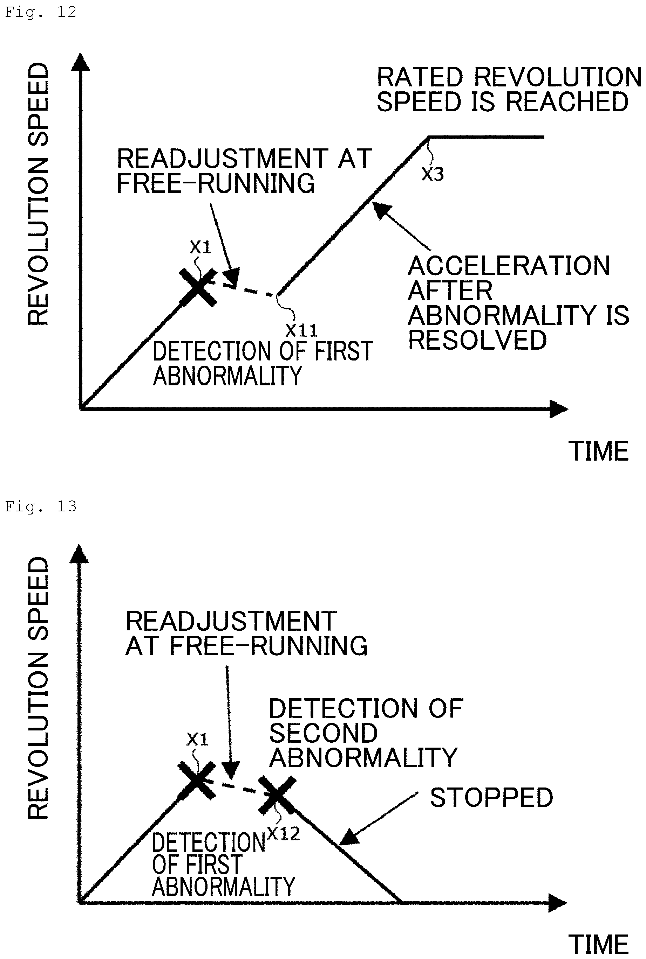

Next, the operation example of FIG. 12 is almost the same as the operation example of FIG. 8, but the difference is that, when the central processing unit (CPU) detects the first abnormality at the point indicated by "X1" in the diagram, the central processing unit (CPU) performs readjustment while causing the rotating body 103 to run freely. By stopping the energization of the motor 121 to cause the rotating body 103 to run freely, the current stops flowing. As a result, the vibration of the motor 121 is reduced and the noise is reduced. Therefore, the S/N ratio of the rotating body displacement signal and the magnetic bearing current signal, which are the input signals to the magnetic bearing controller, improve, and the readjustment accuracy improve. Therefore, the readjustment can be performed at high speed.

Next, the operation example of FIG. 13 is almost the same as the operation example of FIG. 9, but the difference is that, when the central processing unit (CPU) detects the first abnormality at the point indicated by "X1" in the diagram, the central processing unit (CPU) performs readjustment while causing the rotating body 103 to run freely, as in FIG. 12. When the central processing unit (CPU) detects the second abnormality at the point indicated by "X12", the central processing unit (CPU) stops the rotating body 103. As a result, the safety of the pump can be ensured.

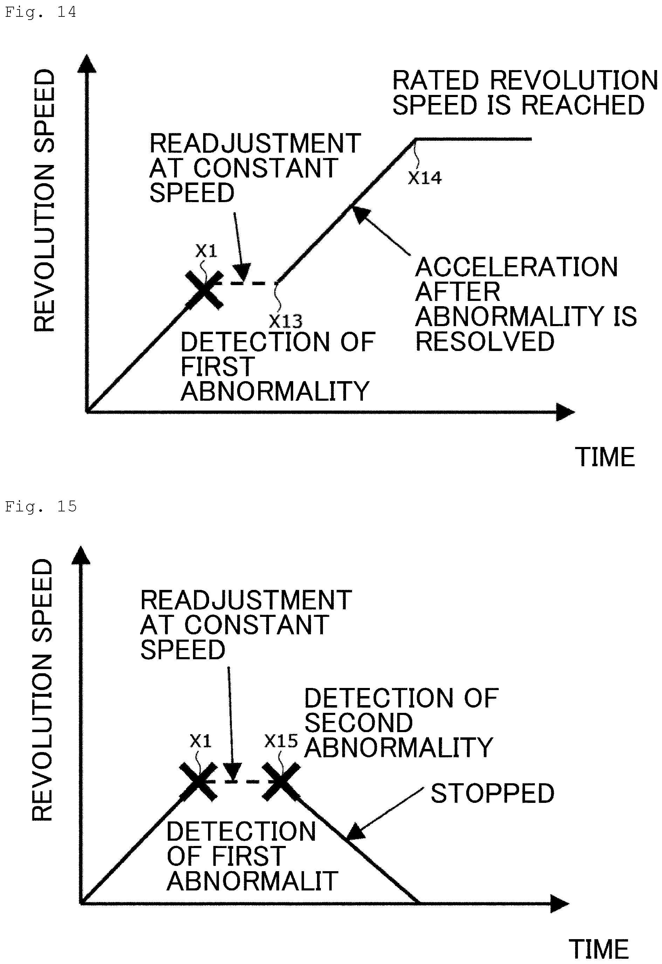

Next, in the operation example of FIG. 14, when the central processing unit (CPU) detects the first abnormality at the point indicated by "X1" in the diagram, the central processing unit (CPU) performs readjustment while performing constant speed control until the point indicated by "X13" in the diagram is reached. By controlling the rotating body at a constant speed, the state when an abnormality occurs can be maintained. This makes it possible to efficiently figure out the cause.

Then, once the central processing unit (CPU) confirms that the first abnormality has been resolved at the point indicated by "X13", the central processing unit (CPU) accelerates the rotating body 103. As a result, the time it takes to reach the rated revolution speed can be saved at the point indicated by "X14," resulting in quick recovery to the rated revolution speed.

Next, in the operation example of FIG. 15, when the central processing unit (CPU) detects the first abnormality at the point indicated by "X1" in the diagram, the central processing unit (CPU) performs readjustment while performing constant speed control. However, when the central processing unit (CPU) detects the second abnormality at the point indicated by "X15", the central processing unit (CPU) stops the rotating body 103. As a result, the safety of the pump can be ensured.

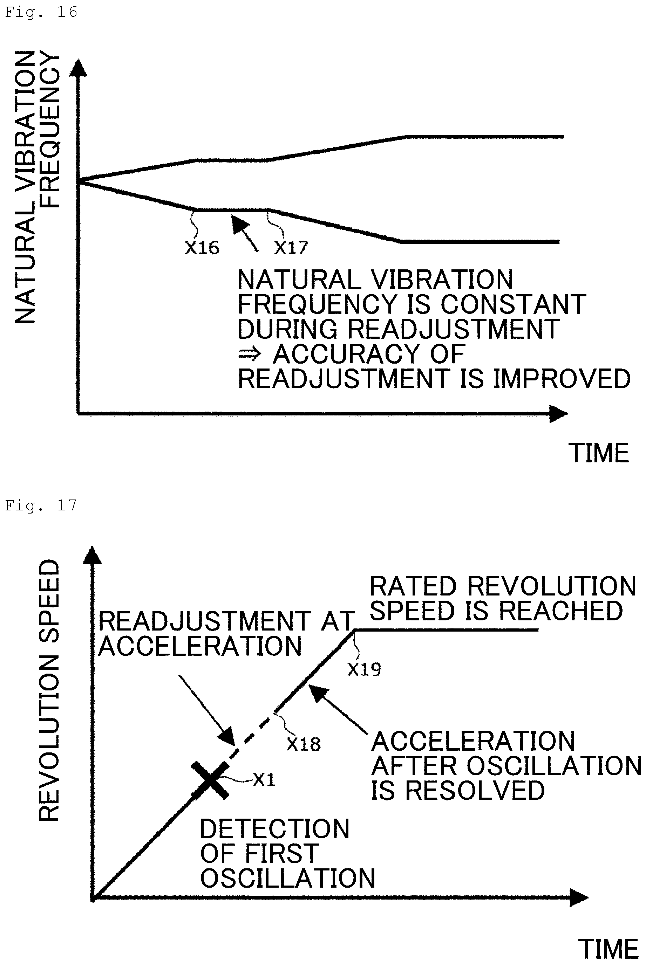

Next, FIG. 16 shows the characteristics of a change in the natural frequency of the rotating body 103 caused by the gyro effect in the operation example of FIG. 14. Due to the gyro effect, the natural frequency of the rotating body 103 changes according to the revolution speed. When the revolution speed is changed as shown in FIG. 14, the natural frequency of the rotating body 103 resembles the relationship between the time and the natural frequency shown in FIG. 16. The turbomolecular pump 100 includes the rotor blades 102, wherein an abnormality such as oscillation due to its natural vibration is likely to occur. In such a case, the central processing unit (CPU) performs readjustment while performing constant speed control from the point indicated by "X16" in the diagram to the point indicated by "X17". That is, since the natural frequency is constant during the readjustment, the readjustment accuracy improves. Therefore, the operation efficiency of the pump can be improved.

Next, in the operation example of FIG. 17, when the central processing unit (CPU) detects the first abnormality at the point indicated by "X1" in the diagram, the central processing unit (CPU) performs readjustment while controlling the acceleration of the rotating body 103. Subsequently, once the central processing unit (CPU) confirms that the first abnormality has been resolved at the point indicated by "X18", the central processing unit (CPU) continues to accelerate the rotating body 103. Since the central processing unit (CPU) executes the readjustment during the acceleration of the rotating body and continues accelerate the rotating body immediately after the abnormality is resolved, the rated revolution speed can be reached most quickly.

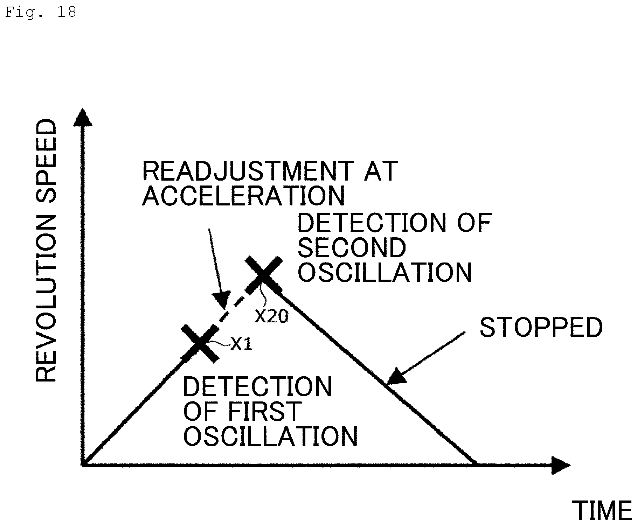

Next, in the operation example of FIG. 18, when the central processing unit (CPU) detects the first abnormality at the point indicated by "X1" in the diagram, the central processing unit (CPU) performs readjustment while controlling the acceleration of the rotating body 103. However, when the central processing unit (CPU) detects the second abnormality at the point indicated by "X20", the central processing unit (CPU) stops the rotating body 103. As a result, the safety of the pump can be ensured.

It is desirable that the processing methods described in the respective operation examples described above be used properly according to the operating state immediately before the detection of the first abnormality. For example, when the immediately preceding operating state indicates acceleration, it is better to accelerate the rotating body in order to reach the rating quickly, so the central processing unit (CPU) selects readjustment during the acceleration operation. Further, if the immediately preceding operating state indicates deceleration, there is no point in accelerating the rotating body, so the central processing unit (CPU) selects readjustment while continuing to decelerate the rotating body. In addition, if the immediately preceding operating state indicates a situation where the temperature changes during the rated rotation and oscillation occurs, the central processing unit (CPU) stops energizing the motor 121 in order to reduce noise, and chooses to cause the rotating body to run freely.

As a result, even if an abnormality such as oscillation occurs due to improper control parameters, the operation of the pump can be restored without stopping.

Next is described a method of quickly detecting pump abnormalities and preventing noise generated by control parameter correction from being mistakenly detected as an abnormality.

For example, when correcting control parameters such as proportional gain, derivative gain, a phase advance filter, a notch filter, and an ABS (Auto Balance System), the control parameters are changed. When changing control parameters, noise tends to occur in the control system. However, this noise is not caused by an abnormality, so the central processing unit (CPU) should not detect it erroneously. On the other hand, noise generated by factors other than control parameter correction should be quickly detected by the central processing unit (CPU) as an abnormality.

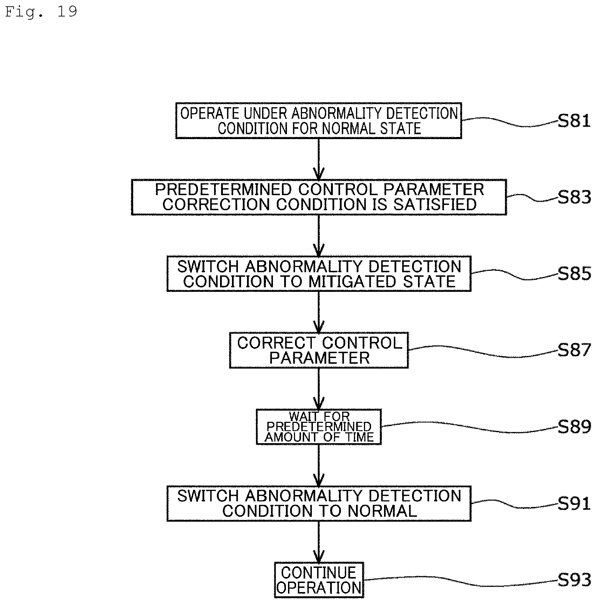

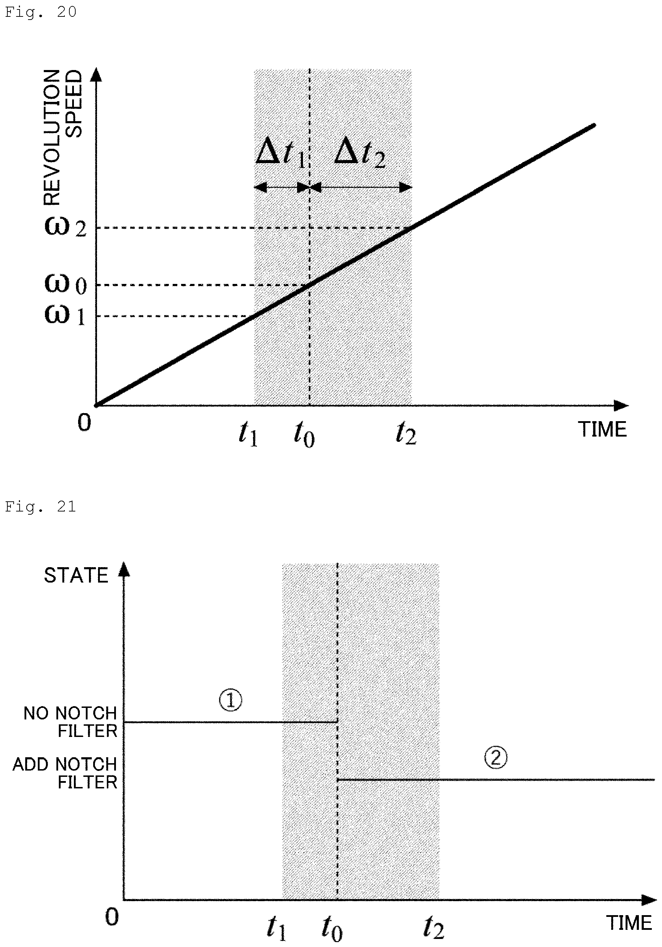

Hereinafter, an operation will be described based on the control parameter correction flowchart in FIG. 19 and the parameter correction timing chart in FIG. 20.

In step 81 of FIG. 19, the operation is performed under abnormality detection conditions for a normal state. In the timing chart of FIG. 20, the operation is performed under the abnormality detection conditions for the normal state from time 0 to time 11. The abnormality detection conditions for the normal state are, for example, the conditions set to detect the first abnormal state and the second abnormal state in the case of the example described above. In step 83, the central processing unit (CPU) determines that the conditions for changing a predetermined control parameter have been met. This determination means that, for example, the central processing unit (CPU) determines that changing a control parameter such as adding the filter a to the central processing unit (CPU) as shown in the time series number 1 in FIG. 4 is ready to be carried out. Then, in step 85, the abnormality detection conditions are switched to a mitigated state at time t1 shown in FIG. 20. The reason for switching the abnormality detection conditions to the mitigated state is to mitigate the abnormality detection conditions so that the central processing unit (CPU) does not detect an abnormality based on noise that is generated as a result of the processing for changing a control parameter.

As an example of mitigation, when detecting the first abnormal state and the second abnormal state described above, for example the central processing unit (CPU) is stopped from detecting an abnormality using the abnormality detection means.

In addition, the standard value of the abnormality detection conditions may be increased in the central processing unit (CPU). For example, as the determination criteria for the first abnormality, the displacement spectrum amplitude is set at 1 µm at the time of mitigation, and the displacement spectrum amplitude is set at 0.5 µm in case of normal operation.

In addition, certain frequency components may be ignored. For example, during mitigation, vibration components at 100 Hz or lower are ignored, and during normal operation, all frequency components, including those at 100 Hz or lower, are used to detect abnormalities. Since the response of the displacement signal due to noise caused by a change of a control parameter is slower than the natural vibration of the rotor blades, the abnormality caused by the natural vibration of the rotor blades can be detected immediately while reducing the effect of noise caused by changes in control parameters.

Next, in step 87, a control parameter is changed at time t0 shown in FIG. 20. At this time, the filter a is added to the central processing unit (CPU) at the time series number 1 in the example shown in FIG. 4. Thereafter, in step 89, a predetermined period of time from time t0 to time t2 shown in FIG. 20 is waited. Then, in step 91, the abnormality detection conditions are switched to the normal state at time t2 shown in FIG. 20, and the operation is continued in step 93.

Describing in detail the operation performed during this period with reference to FIG. 20, at least either the first abnormality detection condition or the second abnormality detection condition is mitigated only for the time period from t1 prior to changing the control parameter to t2 after the change, with t0 being the time of changing the control parameter. In other words, the abnormality detection conditions are mitigated in the shaded area shown in FIG. 20.

If Δt1 = t0 - t1 and Δt2 = t2 - t0, the relationship between Δt1 and Δt2 is preferably 0 <= Δt1 < Δt2. This is because the displacement signal is not disturbed before the control parameter is changed, but is disturbed for approximately one to two seconds immediately after the change. Therefore, for example, Δt1 = 0.005 seconds and Δt2 = 2 seconds are set for a controller with a control period of 0.005 seconds. That is, before changing the control parameter, a wait time period that is equal to or greater than the minimum unit minute of the control cycle is set. Here, Δt1 = 0 seconds is also acceptable. In this case, the abnormality detection means is stopped and at the same time the control parameter is changed.

If the pump is accelerating or decelerating and the relationship between time and revolution speed can be seen to vary linearly, as shown in FIG. 20, the same settings can be made using revolution speeds ω0, ω1, and ω2 instead of times t0, t1, and t2.

Examples of cases where control parameters are changed include (1) when the filter is changed according to a predetermined revolution speed, (2) when the first abnormality is detected and the control parameter correction means of the central processing unit (CPU) corrects a control parameter, and (3) when a control parameter correction command is input to the magnetic bearing controller via external communication.

This allows the central processing unit (CPU) to systematically set the mitigation time only at the limited timing of control parameter correction.

Since the noise caused by control parameter correction is not erroneously detected as an abnormality when correcting a control parameter and the mitigation time is not set except for when correcting a control parameter as in the prior art, the speed of abnormality detection can be accelerated as compared to when a constant mitigation time period subsequent to abnormality detection is always set, improving the reliability of the magnetic bearing system.

In other words, the noise caused by control parameter correction is not erroneously detected for, for example, two seconds during which the central processing unit (CPU) sets the mitigation time period, and the occurrence of an abnormality can be detected instantaneously during other time periods.

Next, specific operation examples concerning mitigation of the abnormality detection conditions will be described.

The operation example of (1) above in which the filter is changed according to the predetermined revolution speed is described first.

For example, in a vacuum pump with the rated speed of 27,000 rpm, a filter ABS (Auto Balance System), which removes the RPM-synchronous component from a displacement signal at a predetermined revolution speed or higher, is turned ON at a revolution speed of 12,000 rpm or more, and turned OFF at a revolution speed below 12,000 rpm. In this case, during acceleration, the abnormality detection conditions are mitigated when the revolution speed reaches 11,940 rpm, the ABS is switched from OFF to ON when the revolution speed reaches 12,000 rpm, and the abnormality detection conditions are returned to normal when the revolution speed reaches 12,240 rpm.

Furthermore, for example, in a vacuum pump with the rated speed of 27,000 rpm, a phase advance filter that is introduced to suppress the resonance mode of the rotating body in a certain speed range is turned ON at a revolution speed equal to or greater than 18,000 rpm and less than 24,000 rpm, and turned OFF at other revolution speeds. In this case, during acceleration, the abnormality detection conditions are mitigated when the revolution speed reaches 17,940 rpm, the filter is switched from OFF to ON when the revolution speed reaches 18,000 rpm, and the abnormality detection conditions are returned to normal when the revolution speed reaches 18,240 rpm. Thereafter, the abnormality detection conditions are mitigated again when the revolution speed reaches 23,940 rpm, the filter is switched from ON to OFF when the revolution speed reaches 24,000 rpm, and the abnormality detection conditions are returned to normal when the revolution speed reaches 24,240 rpm.

Next is described the operation example of (2) above in which the first abnormality is detected and the control parameter correction means corrects a control parameter.

In this case, for example, the control parameter correction means of the central processing unit (CPU) newly sets a notch filter with a center frequency of 800 Hz during rotation at the rated speed of 27,000 rpm. As shown in FIG. 21, at time t1, the abnormality detection conditions are mitigated first, and 0.005 seconds later at time t0, a control parameter is changed, and then two seconds later at time t2, the abnormality detection conditions are returned to normal. Alternatively, mitigation of the abnormality detection conditions and changing a control parameter may be performed at the same time, and then two seconds later, the abnormality detection conditions may be returned to normal.

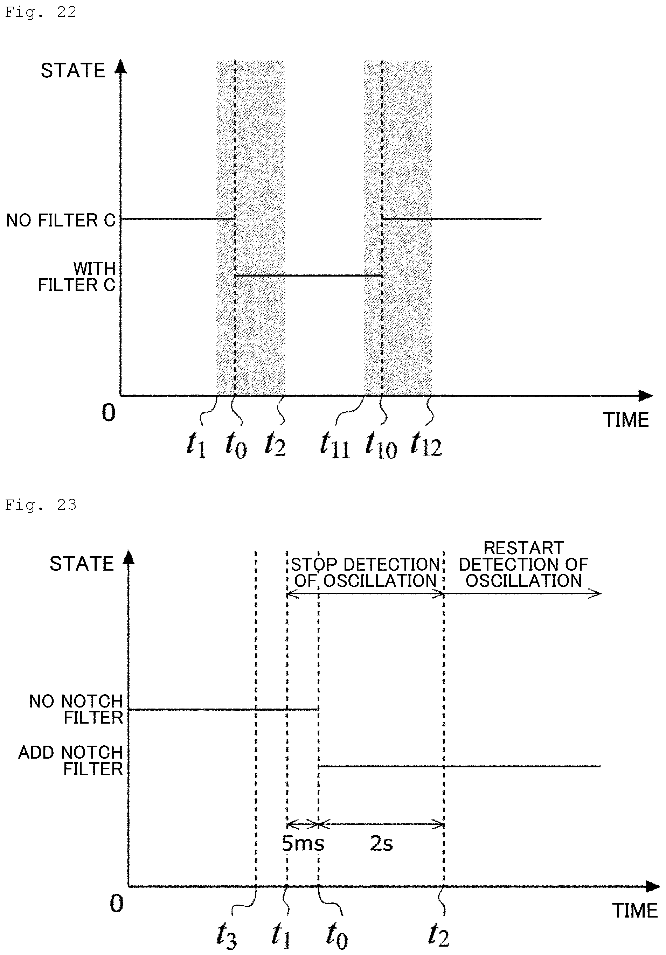

In regards to the case where the filter c is added or restored to the value obtained one step prior in the time series number 3 shown in FIG. 4, as shown in FIG. 22, at time t1 when the filter c is added, first the abnormality detection conditions are mitigated, and 0.005 seconds later at time t0, the filter c is added, and then two seconds later at time t2, the abnormality detection conditions are returned to normal. On the other hand, in regards to the case where the filter c is deleted and restored to the value obtained one step prior, at time t11 when the filter c is deleted, first the abnormality detection conditions are mitigated, and 0.005 seconds later at time t10, the filter c is deleted, and then two seconds later at time 112, the abnormality detection conditions are returned to normal.

Next is described the operation example of (3) above in which a control parameter correction command is input to the magnetic bearing controller via external communication.

As shown in FIG. 23, during a pump operation, at time t3 a control parameter correction command is input to the magnetic bearing controller by a user operation via external communication. The user operation is performed, for example, when a notch filter with a center frequency of 800 Hz is newly set during rotation at the rated speed of 27,000 rpm, when the center frequency of the notch filter is changed from 800 Hz to 900 Hz, or when proportional gain is changed by a factor of 0.9 compared to the previous. In this case, at time t1, the central processing unit (CPU) of the control device transmits the command. The central processing unit (CPU) first mitigates the abnormality detection conditions, and 0.005 seconds later at time t0, changes a control parameter. Then, two seconds later at time t2, the abnormality detection conditions are returned to normal.

However, at time t0, mitigation of the abnormality detection conditions and changing a control parameter may be performed at the same time first, and then two seconds later at time t2, the abnormality detection conditions may be returned to normal.

As mentioned earlier, the abnormality detection conditions implemented in the central processing unit (CPU) include excessive displacement or current due to oscillation, fluctuations in the displacement spectrum or current spectrum, etc., contact with the touchdown bearings 141, 143, DC link voltage, and the like, but the abnormality detection conditions to be temporarily mitigated may be some or all of these implemented abnormality detection conditions. It is preferred that only the abnormality detection conditions based on the displacement signal be mitigated, and the other abnormality detection conditions not be mitigated. At the time of control parameter correction, large noise tends to occur in a displacement signal, while noises in other signals are small. Therefore, erroneous detection of noise caused by control parameter correction is inhibited, and an abnormal state other than noise, such as power failure that happens to occur simultaneously with noise caused by control parameter correction can be detected at high speed, thus improving reliability.

Time t0 and time t10 and the revolution speed ω0 correspond to the points on the time axis, the revolution speed axis, and the frequency axis where control parameters are corrected, and the range from time t1 to t2 and the range from the revolution speed ω1 to ω2 correspond to the predetermined range of areas. In addition, the range from time t1 to t0 and the range from the revolution speed ω1 to ω0 correspond to the front area, and the range from time t0 to t2 and the range from the revolution speed ω0 to ω2 correspond to the rear area.

Various modifications can be made to the present invention without departing from the spirit of the present invention, and it goes without saying that the present invention extends to such modifications. In addition, the embodiments described above may be combined in various ways.

### REFERENCE SIGNS LIST

- 100: Turbomolecular pump
- 102: Rotor blade
- 103: Rotating body
- 104: Upper radial electromagnet
- 105: Lower radial electromagnet
- 106A, 106B: Axial electromagnet
- 107: Upper radial sensor
- 108: Lower radial sensor
- 109: Axial sensor
- 111: Metal disc
- 113: Rotor shaft
- 121: Motor
- 141, 143: Touchdown bearing

## Claims

1. A magnetic bearing device, comprising:
a rotating body;
a magnetic bearing that magnetically supports the rotating body in a floating manner in air; and
a magnetic bearing controller that controls the magnetic bearing,
the magnetic bearing device further comprising:
a first abnormality detection means for detecting an abnormality of control by the magnetic bearing controller on a basis of a predetermined first abnormality condition;
a control parameter correction means for correcting a control parameter of the magnetic bearing controller while continuing an operation of the magnetic bearing device when the first abnormality detection means detects the abnormality of the control;
a second abnormality detection means for detecting the abnormality of the control by the magnetic bearing controller on a basis of a predetermined second abnormality condition having a larger degree of abnormality than the first abnormality condition; and
a stopping means for stopping the operation of the magnetic bearing device when the second abnormality detection means detects the abnormality of the control.

2. The magnetic bearing device according to claim 1, wherein the control parameter correction means includes implementing:
a changing step of changing the control parameter from a control parameter obtained one step before;
a control step of causing the magnetic bearing controller to control using the control parameter changed in the changing step; and
a state improvement determination step of determining whether or not a state of the abnormality of the control has improved as a result of the control in the control step, as compared to a result of the control performed one step before the control step, keeping a changed value as the control parameter when determination is made that the state of the abnormality of the control has improved, meanwhile returning the control parameter to the control parameter obtained one step before when determination is made that the state of the abnormality of the control has not improved.

3. The magnetic bearing device according to claim 2, wherein the control parameter correction means further includes implementing, after the state improvement determination step determines that the state of the abnormality of the control has improved, a first abnormality resolution determination step of determining whether the state of the abnormality of the control has been resolved on the basis of the first abnormality condition, and returning to the changing step when determination is made that the state of the abnormality of the control determined under the first abnormality condition has not been resolved, meanwhile keeping the control parameter obtained at a time when determination is made that the state of the abnormality of the control determined under the first abnormality condition has been resolved.

4. The magnetic bearing device according to claim 3, wherein the control parameter correction means further includes implementing, after the first abnormality resolution determination step determines that the state of the abnormality of the control determined under the first abnormality condition has been resolved, a stability evaluation step of evaluating whether or not operation of the magnetic bearing device that employs the control parameter saved in the first abnormality resolution determination step has a predetermined stability where the abnormality of the control by the magnetic bearing controller does not occur, and wherein a do-over of the control parameter of the magnetic bearing controller is implemented when the stability evaluation step evaluates that the stability is not sufficient.

5. The magnetic bearing device according to claim 4, wherein the stability evaluation step performs the evaluation using at least one of application of a vibration signal, an increase in a control gain of the magnetic bearing controller, and a decrease in the control gain of the magnetic bearing controller.

6. The magnetic bearing device according to any one of claims 1 to 5, wherein, when the abnormality of the control determined based on the second abnormality condition is detected in the process of correcting the control parameter by the control parameter correction means, the control parameter correction means applies the control parameter set in the past to stop the operation of the magnetic bearing device.

7. The magnetic bearing device according to any one of claims 1 to 5, wherein when the first abnormality detection means detects the abnormality of the control, the control parameter correction means corrects the control parameter of the magnetic bearing controller while decelerating the rotating body.

8. The magnetic bearing device according to any one of claims 1 to 5, wherein when the first abnormality detection means detects the abnormality of the control, the control parameter correction means stops revolution speed control of the rotating body and corrects the control parameter of the magnetic bearing controller in a state in which the rotating body runs freely.

9. The magnetic bearing device according to any one of claims 1 to 5, wherein when the first abnormality detection means detects the abnormality of the control, the control parameter correction means corrects the control parameter of the magnetic bearing controller while controlling the revolution speed of the rotating body at a constant speed using the revolution speed obtained when the abnormality is detected.

10. The magnetic bearing device according to any one of claims 1 to 5, wherein when the first abnormality detection means detects the abnormality of the control, the control parameter correction means corrects the control parameter of the magnetic bearing controller while accelerating the rotating body.

11. The magnetic bearing device according to claim 7, wherein the rotating body is accelerated when the state of the abnormality under the first abnormality condition is resolved after the control parameter of the magnetic bearing controller is corrected.

12. A vacuum pump, comprising the magnetic bearing device according to any one of claims 1 to 5 mounted therein.

13. A magnetic bearing device, comprising:
a rotating body;
a magnetic bearing that magnetically supports the rotating body in a floating manner in air; and
a magnetic bearing controller that controls the magnetic bearing,
the magnetic bearing device further comprising:
an abnormality detection means for detecting an abnormality of control by the magnetic bearing controller on the basis of a predetermined abnormality condition;
a control parameter correction means for correcting a control parameter of the magnetic bearing controller;
a predetermined range of areas that are set including any point on a time axis, a revolution speed axis, or a frequency axis where the control parameter correction means corrects the control parameter; and
a mitigating means for mitigating the predetermined abnormality condition in the predetermined range of areas.

14. The magnetic bearing device according to claim 13, wherein
the predetermined abnormality condition is constituted of a plurality of types, and
an abnormality condition to be mitigated by the mitigating means includes an abnormality condition based on a displacement signal.

15. The magnetic bearing device according to claim 13 or 14, wherein the predetermined range of areas is constituted of a front area in front of the point and a rear area behind the point, the rear area being larger than the front area.

16. The magnetic bearing device according to claim 13 or 14, wherein the predetermined range of areas is constituted only of a rear area behind the point.

17. A vacuum pump, comprising the magnetic bearing device according to claim 13 or 14 mounted therein.
